**Europäisches Patentamt**

**European Patent Office**

**Office européen des brevets**

(19)

(11) Veröffentlichungsnummer: **0 105 940**
**A1**

(12)

# EUROPÄISCHE PATENTANMELDUNG

(21) Anmeldenummer: **82109277.2**

(22) Anmeldetag: **07.10.82**

(51) Int. Cl.³: **B 60 G 13/00, F 16 F 9/54**

(43) Veröffentlichungstag der Anmeldung: **25.04.84**
**Patentblatt 84/17**

(84) Benannte Vertragsstaaten: **AT BE CH DE FR GB IT LI LU NL SE**

(71) Anmelder: **Deutsche ITT Industries GmbH, Hans-Bunte-Strasse 19 Postfach 840, D-7800 Freiburg (DE)**

(84) Benannte Vertragsstaaten: **DE**

(71) Anmelder: **ITT INDUSTRIES INC., 320 Park Avenue, New York, NY 10022 (US)**

(84) Benannte Vertragsstaaten: **BE CH FR GB IT LI LU NL SE AT**

(72) Erfinder: **Meeldijk, Maarten Laurens, Magnolia-Straat 5, Oud-Beijerland (NL)**

(74) Vertreter: **Frigger, Heinz, Dipl.-Ing., c/o Alfred Teves GmbH Guerickestrasse 7 Postfach 900120, D-6000 Frankfurt/Main 90 (DE)**

(54) **Verfahren zum Austausch eines Stossdämpfers und Vorrichtung zur Durchführung des Verfahrens.**

(57) Zum Austausch der die Stossdämpfung bewirkenden, dem Verschleiss ausgesetzten Teile eines Stossdämpfers, der in ein mit dem Radträger eines Kraftfahrzeuges verbundenen Gehäuse (1) nicht lösbar eingebaut ist, werden zunächst die den Zylinderdeckel umschliessenden Teile des Gehäuses maschinell entfernt, z. B. abgesägt, und sodann die verschliessenden Teile dem Gehäuse (1) entnommen. Anschliessend wird auf das Gehäuse eine Buchse (6) aufgeschoben, die in der Innenwandung in dem aufgeschobenen Teil eine umlaufende Nut (9) besitzt. Mit Hilfe eines von oben eingesetzten, in die Buchse (6) und in das Gehäuse (1) eingreifenden Spezialwerkzeuges (10) wird nun, lediglich durch Verdrehen eines in der Gehäuseachse angeordneten Bolzens (12) eine mechanische Verankerung zwischen der Buchse und dem Gehäuse hergestellt, und zwar dadurch, dass Teile der Gehäusewandung in die Nut der Buchse eingepresst werden. Nach Entnahme des Spezialwerkzeuges (10) wird die Austausch-Stossdämpfereinheit (2) eingesetzt und unmittelbar oberhalb des Gehäuses in ein Innengewinde, das sich in dem nicht aufgeschobenen Teil der Buchse befindet, eingeschraubt. Die Austauscheinheit bzw. der Ersatzstossdämpfer verfügt zu diesem Zweck über einen mit einem Aussengewinde versehenen Ring (18), der unmittelbar unterhalb des Zylinderdeckels (4) angeordnet ist.

EP 0 105 940 A1

ACTORUM AG

- 2 -

Verfahren zum Austausch eines Stoßdämpfers und
Vorrichtung zur Durchführung des Verfahrens

Die Erfindung bezieht sich auf ein Verfahren zum Austausch eines Stoßdämpfers, der als wesentliche, die Dämpfung bewirkende Teile einen in einem Zylinder angeordneten Kolben mit einer durch den Zylinderdeckel hindurchgeführten Kolbenstange aufweist und der in ein mit dem Radträger verbundenen Gehäuse nicht lösbar eingebaut ist,
insbesondere zum Austausch der dem Verschleiß unterworfenen Teile des Stoßdämpfers. Bei einem solchen Verfahren
wird zunächst ein den Zylinderdeckel nicht lösbar umschließender Teil des Gehäuses abgesägt, abgeschliffen
oder auf ähnliche Weise maschinell entfernt. Sodann werden die auszutauschenden Teile des Stoßdämpfers entnommen
und durch eine Austauscheinheit ersetzt. Eine Vorrichtung, nämlich ein nach dem Entfernen der verbrauchten
Teile einzusetzender Austausch-Stoßdämpfer, gehört ebenfalls zur Erfindung.

Bei den bekannten Radaufhängungen mit Stoßdämpfern, in
denen der Zylinderdeckel in nicht entfernbarer Weise angebracht ist, mußte bisher bei Verschleiß der die Stoß-

. . .

dämpfung bewirkenden Teile die relativ teure Radaufhängung insgesamt ersetzt werden. Daher wurde bereits vorgeschlagen (DE-OS 29 37 212), bei derartigen Stoßdämpfern
den den Zylinderdeckel umgreifenden oberen Gehäuserand
maschinell zu entfernen, die verbrauchten die Dämpfung
bewirkenden Teile zu entnehmen und eine vorgefertigte,
neue Stoßdämpfereinheit einzusetzen. Hierzu wurde in den
ursprünglich geschlossenen Gehäuseboden eine Bohrung eingebracht, um die Austauscheinheit am Boden anschrauben zu
können. Am oberen Ende, also in Höhe des Zylinderdeckels,
erhielt das Austauschelement ein wenig Übermaß, so daß es
oben nach Einsetzen in das Gehäuse durch Preßsitz gehaltert wurde, was durch Aufrauhen oder Rändeln der Oberfläche des Zylinderdeckels noch verbessert werden sollte.
Der zum Einsetzen des Austausch-Stoßdämpfers erforderliche Arbeitsaufwand ließ in manchen Fällen zu wünschen
übrig.

Der Erfindung liegt nun die Aufgabe zugrunde, den Austausch der die Dämpfung bewirkenden Teile eines Stoßdämpfers, der in einem mit dem Radträger verbundenen Gehäuse
nicht lösbar eingebaut ist bzw. ohne Zerstörung des den
Zylinderdeckel umschließenden Gehäuseteiles nicht entfernt werden kann, erheblich zu erleichtern und insbesondere die Montage der Austausch-Stoßdämpfereinheit nach
dem Entfernen der verschlissenen Teile zu vereinfachen.

Es hat sich nun gezeigt, daß diese Aufgabe in überraschend einfacher, technisch sehr fortschrittlicher Weise gelöst werden kann, wenn bei einem Verfahren der eingangs genannten Art nach dem Entfernen der auszutauschen-

...

- 3 -

den Teile eine in ihrem inneren Querschnitt der Außenkontur des Gehäuses entsprechenden Buchse oder Hülse teilweise auf das Gehäuse aufgeschoben wird, wenn die Gehäusewandung gegenüber dem aufliegenden Teil der Buchse arretiert wird und wenn anschließend die auszutauschenden
Teile des Stoßdämpfers eingesetzt und außerhalb des Gehäuses, d.h. an dem das Gehäuse nicht übergreifenden Teil
an der Innenwandung der Buchse befestigt werden.

Nach einer vorteilhaften Ausführungsart derErfindung wird
die Wandung des Gehäuses mit dem aufgeschobenen Teil der
Buchse mechanisch in Eingriff gebracht. Hierzu besitzt
z.B. die Buchse auf ihrer Innenfläche in Höhe des auf das
Gehäuse aufgeschobenen Teils wenigstens eine teilweise
oder vollständig umlaufende Nut, in die die Wandung des
Gehäuses mit Hilfe eines vor dem Einbringen der auszutauschenden Stoßdämpferteile eingesetzten Spezialwerkzeuges
stellenweise von innen eingepreßt wird. Geeignet ist
hierzu z.B. ein Werkzeug, das mehrere in Höhe der Nut,
die sich auf der Innenseite des aufgeschobenen Teils der
Buchse befindet, angeordnete, radial verschiebbare, außen
mit einem Preßdorn versehenen Kolben aufweist, wobei mit
diesen Kolben auf die Innenwandung des Gehäuses die zum
Einpressen der Gehäuseteile in die Nut erforderliche
Kraft ausgeübt wird.

Nach einer weiteren Ausführungsart des erfindungsgemäßen
Verfahrens sind zusätzlich auf der Innenseite des auf das
Gehäuse aufschiebbaren Teils der Buchse eine oder mehrere
umlaufende Nuten eingefügt, in die vor dem Zusammenfügen
der beiden Teile, d.h. des Gehäuses und der Buchse,
Dichtringe eingelegt werden.

...

- 4 -

Zweckmäßigerweise werden erfindungsgemäß die auszutauschenden Teile des Stoßdämpfers nach dem Aufschieben und Arretieren der Buchse eingeschraubt, wozu die Buchse in dem nicht die Gehäusewandung übergreifenden Teil mit einem Innengewinde versehen wird.

Zur Durchführung des erfindungsgemäßen Verfahrens ist eine Vorrichtung besonders geeignet, die im wesentlichen aus einem in das am Radträger befestigte, oben geöffnete Gehäuse einsetzbaren Austausch-Stoßdämpfer besteht, der die für die Dämpfungswirkung erforderlichen Teile enthält, nämlich einen Stoßdämpferkolben mit einer durch den Zylinderdeckel hindurch herausgeführten Kolbenstange, einen Zylinderraum, Ventile und ein Reservoir für die Dämpfflüssigkeit. Diese Vorrichtung ist erfindungsgemäß mit einer Buchse ausgerüstet, die in ihrem inneren Querschnitt der Außenkontur des Gehäuses angepaßt ist und die einen auf das Gehäuse aufschiebbaren unteren Teil sowie einen mit einem Innengewinde versehenen oberen Teil aufweist, in das die die Stoßdämpfung bewirkenden Austauschteile einschraubbar sind.

Der Austausch-Stoßdämpfer besitzt nach einer noch weiteren Ausführungsart der Erfindung einen nach dem Einsetzen in das Gehäuse herausragenden oberen Abschnitt, der einen Gewindering trägt, welcher in das Innengewinde der Buchse einschraubbar ist bzw. mit welchem die Austauscheinheit eingeschraubt werden kann.

Mit dem erfindungsgemäßen Verfahren und der entsprechenden Vorrichtung läßt sich also nach dem maschinellen Öff-

- 5 -

nen des Gehäuses am oberen Ende und nach dem Entfernen
der defekten oder verbrauchten Stoßdämpferteile auf sehr
einfache Weise und mit wenigen Handgriffen die Austauscheinheit einsetzen und arretieren. Das Spezialwerkzeug,
das im folgenden anhand eines Beispiels noch näher beschrieben wird, ermöglicht es, den Austausch in sehr kurzer Zeit durchzuführen. Da das zur Radaufhängung gehörende, mit dieser nicht lösbar verbundene Gehäuse erhalten
bleibt, wird der Gesamtaufwand zur Wiederherstellung der
stoßgedämpften Radaufhängung gering.

Weitere Vorteile und Anwendungsmöglichkeiten der Erfindung gehen aus der folgenden Beschreibung weiterer Details anhand der beigefügten Abbildungen eines Ausführungsbeispiels der Erfindung hervor.

Es zeigen in schematischer Vereinfachung

Fig.1      in Teildarstellung, teilweise im Schnitt, einen
Stoßdämpfer mit einer Austausch-Stoßdämpfereinheit gemäß einer Ausführungsart der Erfindung,

Fig.2      im Querschnitt eine Sicht entlang der Linie A-A

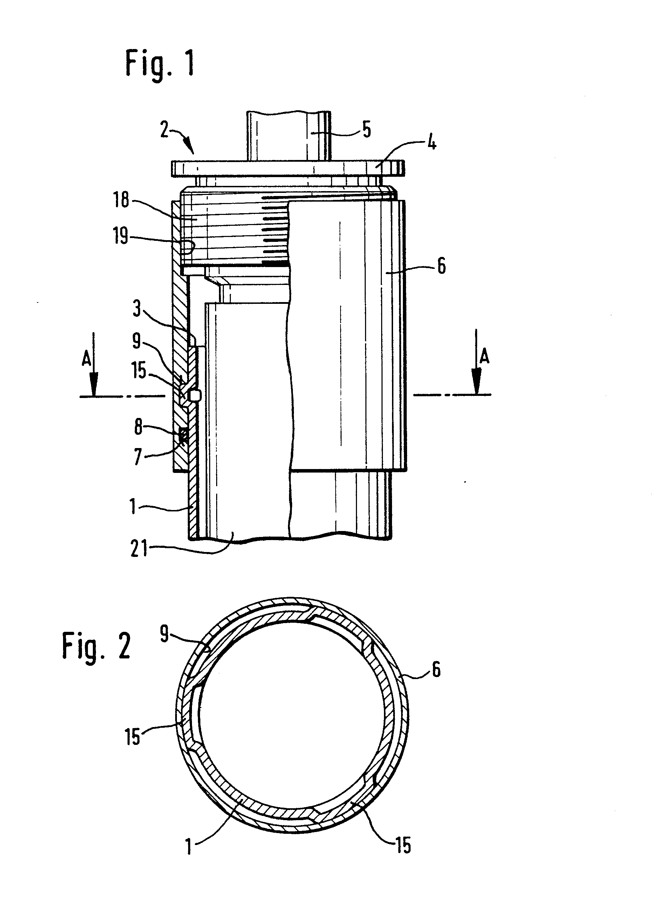

in Fig.1 ,

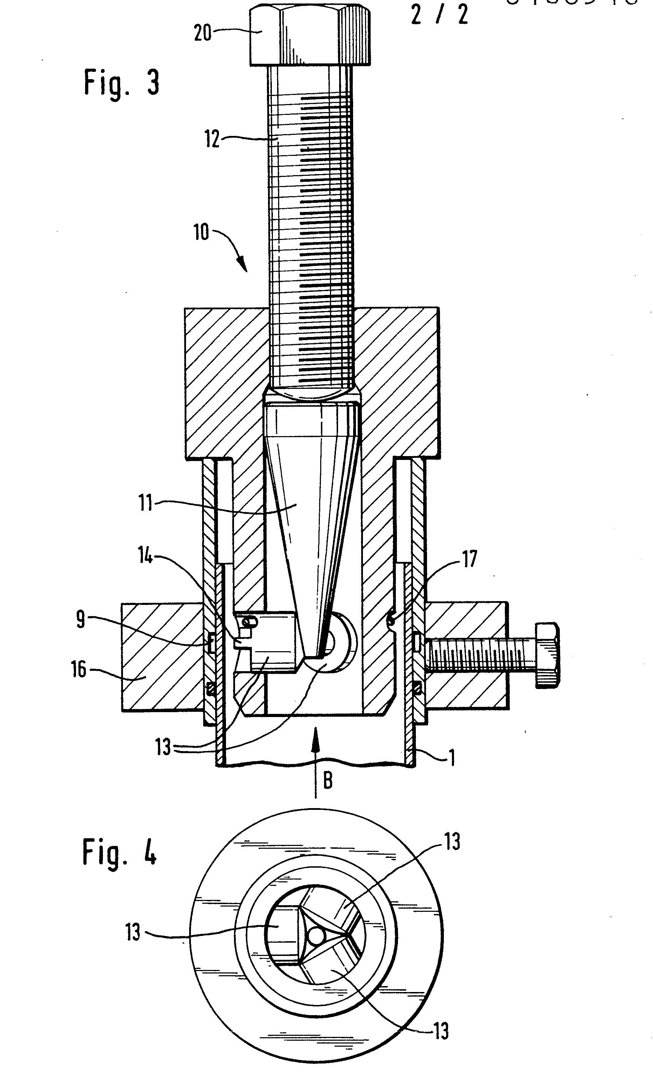

Fig.3      im Längsschnitt einen Teil des Stoßdämpfers
nach Fig.1 nach Entfernen der auszutauschenden
Teile und nach dem Einsetzen des Spezialwerkzeuges zur Verbindung des Gehäuses mit der
Buchse, und

...

Fig.4      eine Sicht in Richtung des Pfeiles B auf das
           Spezialwerkzeug nach Fig.3.


In Fig.1 ist nur der obere Teil eines aufrechtstehenden
Stoßdämpfers dargestellt, nachdem die für die Dämpfungswirkung wichtigen, dem Verschleiß unterliegenden Teile
unter Anwendung des erfindungsgemäßem Verfahrens ausgetauscht wurden.

Zur Durchführung der Reparatur bzw. des Austauschs wurde
zunächst in bekannter Weise, wie dies z.B. in der DE-OS
29 37 212 beschrieben ist, der obere Teil des Stoßdämpfergehäuses 1 abgesägt, abgeschliffen oder auf ähnliche
Weise maschinell so weit entfernt, daß die die Stoßdämpfung bewirkenden Teile entnommen und die Austausch-Stoßdämpfereinheit 2 eingesetzt werden konnten. Ursprünglich
erstreckte sich das Gehäuse 1 über die Abtrennfläche 3
hinaus nach oben bis zur Höhe des zuvor vorhandenen Zylinderdeckels und war dort nach innen zur angedeuteten
Stoßdämpferachse hin abgebogen, so daß es den Zylinderdeckel nicht lösbar umgab. Die in Fig.1 gezeigten Teile,
nämlich der Zylinderdeckel 4 und die durch den Zylinderdeckel in üblicher Weise hindurchgeführte Kolbenstange 5
sind Bestandteile der Austausch-Stoßdämpfereinheit. Allein das abgesägte Gehäuse 1 war ursprünglich, d.h. vor
dem Austausch, bereits vorhanden.

Zur Durchführung des erfindungsgemäßen Verfahrens wird
auf das abgesägte Gehäuse 1 zunächst die Buchse 6, die in
Fig.1 links von der Mittellinie aufgeschnitten, rechts in

...

der Außenansicht dargestellt ist, auf das Gehäuse 1 von oben aufgeschoben. Da der Innendurchmesser der Buchse 6 dem Außendurchmesser des Gehäuses 1 entspricht, läßt sich die Buchse 6 sehr einfach bis zur später beschriebenen mechanischen Verankerung vorjustieren. In die untere, in die Innenwandung der Buchse 6 eingefügte Nut 7 wurde in dem hier gezeigten Ausführungsbeispiel zuvor, d.h. vor dem Aufschieben, ein Dichtring eingelegt.

Die in bezug auf Fig.1 obere, umlaufende Nut 9 dient zur Arretierung der Buchse 6 gegenüber dem Gehäuse 1. Hierzu wird in der erfindungsgemäß vorgesehenen Weise die Gehäusewandung 1 verformt und, wie dies aus Fig.2 zu ersehen ist, mit der Nut 9 bzw. mit der über die Trennfläche 3 hinweg aufgeschobenen Wandung der Buchse 6 mechanisch in Eingriff gebracht. Dies läßt sich besonders einfach und schnell mit dem in Fig.3 gezeigten Spezialwerkzeug 10 realisieren, das gleichzeitig mit dem Aufschieben der Buchse 6 oder anschließend an das Aufbringen dieser Buchse, jedoch vor dem Einbringen des Austausch-Stoßdämpfers 2 eingesetzt wird.

Das Spezialwerkzeug 10 enthält als wesentliche Bestandteile in der hier verwendeten Ausführungsart drei im Winkel von jeweils 120 Grad zueinander versetzt auf einer Ebene angeordnete Kolben 13, die durch Eintreiben des keilförmigen Werkzeugteiles 11 und/oder Verdrehen des Bolzens 12 radial nach außen verschoben werden. Die Kolben 13 enden an ihrer radialen Außenfläche in einen Preßstempel 14, über den die erforderliche Kraft zur plastischen Verformung der Gehäusewandung bzw. zum partiellen Einpressen der Gehäuseteile 15 (siehe Fig.2) in die Nut 9
aufgebracht wird. Während des Preßvorgangs, der die gegenseitige mechanische Verankerung von Gehäuse 1 und
Buchse 6 herbeiführt, wird durch das ringförmige Gegenlager 16, das Bestandteil des Werkzeuges 10 ist, einer Ausweitung bzw. Verformung der Buchse 6 entgegengewirkt. Zum
Erreichen einer ausreichenden festen Verankerung zwischen
den Teilen 1 und 6 bzw. durch die in die Nut eindringenden Gehäuseteile 15 (vergl. Fig.2) ist das Gegenlager 16
ebenfalls erforderlich.

Da das Spezialwerkzeug 10, vergl. Fig.3, auf dem oberen
Rand der Buchse 6 zur Auflage kommt, läßt sich auf einfache Weise sicherstellen, daß der Preßdorn bzw. Preßstempel 14 des Kolbens 13 stets in Höhe der Nut 9 auf die Innenwandung des Gehäuses 1 einwirkt; eine besondere Justage ist hierzu nicht erforderlich, was in der Praxis zur
Vereinfachung der Montagearbeiten und zur Vermeidung von
Fehlern ebenfalls wichtig ist.

Die Abtrennstelle 3 muß im allgemeinen so tief liegen,
daß nach dem Einfügen der Austauschteile die ursprüngliche Höhe des Stoßdämpfers nicht überschritten wird.

Das Einsetzen des Austausch-Stoßdämpfers beginnt also in
der hier gezeigten Ausführungsart der Erfindung mit dem
Aufschieben der Buchse 6 auf das Gehäuse 1 bzw. auf den
abgesägten Stumpf dieses Gehäuses. Zuvor wird in die untere Nut 7 ein Dichtungsring 8 (siehe Fig.1) eingelegt.
Anschließend wird von oben das Spezialwerkzeug 10 einschließlich des Gegenlagers 16 (siehe Fig.3) aufgesetzt

...

— · —

und durch Verdrehen des Bolzens 12 an der Sechskantmutter
20 die Verformung der Gehäusewandung in Höhe der Nut 9
bzw. der Eingriff der durch den Preßdorn 10 erzeugten
Ausbuchtungen 15 in die Nut 9 hergestellt. Der in Fig.3
angedeutete Spannring 17, der den in das Gehäuse 1 eingreifenden Teil des Werkzeuges 10 in Höhe der Kolben 13
umgibt, dient zur Zurückstellung der Kolben 13 nach dem
Zurückdrehen des Bolzens in die in Fig.3 gezeigte Ausgangslage.

Nach der Entnahme des Spezialwerkzeuges 10 kann nun von
oben die Austausch-Stoßdämpfereinheit eingesetzt und mit
Hilfe des Gewinderinges 18 (Fig.1) befestigt werden.
Hierzu verfügt die Buchse 6 an ihrem außerhalb des Gehäuses 1 angeordneten, also in dem nicht auf die Außenfläche des Gehäuses 1 aufgeschobenen Teil über ein Innengewinde 19 zur Befestigung bzw. zum Einschrauben der
Stoßdämpfer-Austauscheinheit. Da der zylinderförmige, im
Inneren den (nicht gezeigten) Kolben führende Teil 21 der
Austauscheinheit in seinem Außendurchmesser auf den Innendurchmesser des Gehäuses 1 abgestimmt ist, genügt zur
Befestigung der Austauscheinheit in dem ursprünglichen
Gehäuse 1 die Schraubverbindung zwischen dem Gewindering
18 und der Buchse 6. Der Ring 18 selbst wird entweder bei
der Vorfertigung der Austauschteile auf den Ersatzstoßdämpfer aufgebracht, oder er wird im Rahmen des Austauschs montiert. Eine einstückige Ausbildung des Teiles
18 mit der Austauscheinheit ist ebenfalls denkbar.

...

0105940

Deutsche ITT Industries GmbH     Frankfurt/M, 19.8.82

7800 Freiburg                    ZL/KB/Lie (0001Q)


                                 M.L. Meeldijk -1



        Patentansprüche




1.  Verfahren zum Austausch eines Stoßdämpfers, der als wesentliche, die Stoßdämpfung bewirkenden Teile einen in
    einem Zylinder angeordneten Kolben mit einer durch den
    Zylinderdeckel hindurchgeführten Kolbenstange aufweist
    und der in ein mit dem Radträger verbundenes Gehäuse
    nicht lösbar eingebaut ist, insbesondere zum Austausch
    der dem Verschleiß unterworfenen Teile des Stoßdämpfers,
    bei dem zunächst ein den Zylinderdeckel nicht lösbar umschließender Teil des Gehäuses abgesägt, abgeschliffen
    oder auf ähnliche Weise maschinell entfernt wird und bei
    dem sodann die auszutauschenden Teile des Stoßdämpfers
    entnommen und durch eine Austausch-Stoßdämpfereinheit er-
    setzt werden, dadurch g e k e n n z e i c h n e t , daß
    nach dem Entfernen der auszutauschenden Teile eine in
    ihrem inneren Querschnitt der Außenkontur des Gehäuses

                                                        ...

(1) entsprechende Buchse (6) teilweise auf das Gehäuse
(1) aufgeschoben wird, daß die Gehäusewandung gegenüber
dem aufliegenden Teil der Buchse (6) arretiert wird und
daß anschließend die Austauscheinheit (2) des Stoßdämpfers eingesetzt und außerhalb des Gehäuses (1), d.h. an
dem das Gehäuse (1) nicht übergreifenden Teil an der Innenwandung der Buchse (6) befestigt werden.

2. Verfahren nach Anspruch 1, dadurch
   g e k e n n z e i c h n e t , daß die Wandung des Gehäuses (1) mit dem aufgeschobenen Teil der Buchse (6) mechanisch in Eingriff gebracht wird.

3. Verfahren nach Anspruch 2, dadurch
   g e k e n n z e i c h n e t , daß die Buchse (6) auf
   ihrer Innenfläche in Höhe des auf das Gehäuse (1) aufgeschobenen Teils wenigstens eine teilweise oder vollständig umlaufende Nut (9) aufweist, in die die Wandung des
   Gehäuses (1) mit Hilfe eines vor dem Einbringen der Austauscheinheit (2) eingesetzten Spezialwerkzeuges (10)
   stellenweise von innen eingepreßt wird.

4. Verfahren nach Anspruch 3, dadurch
   g e k e n n z e i c h n e t , daß das Spezialwerkzeug
   (10) mehrere in Höhe der Nut (9), die sich auf der Innenseite des aufgeschobenen Teils der Buchse (6) befindet,
   angeordnete, radial nach außen verschiebbare, außen mit
   einem Preßdorn (14) versehene Kolben (13) aufweist und
   daß mit diesen Kolben (13) auf die Innenwandung des Gehäuses (1) die zum Einpressen der Gehäuseteile in die Nut
   (9) erforderliche Kraft ausgeübt wird.

...

- 3 -

5. Verfahren nach einem der Ansprüche 1 - 4, dadurch g e k e n n z e i c h n e t, daß auf der Innenseite des auf das Gehäuse (1) aufschiebbaren Teils der Buchse (6) zusätzlich eine oder mehrere umlaufende Nuten (7) eingefügt sind, in die vor dem Zusammenfügen der beiden Teile (1, 6) Dichtringe (8) eingelegt werden.

6. Verfahren nach einem der Ansprüche 1 - 5, dadurch g e k e n n z e i c h n e t , daß die Austauscheinheit (2) nach dem Aufschieben und Arretieren der Buchse (6) eingeschraubt wird.

7. Vorrichtung zur Durchführung des Verfahrens nach einem der Ansprüche 1 - 6, bestehend im wesentlichen aus einem in das am Radträger befestigte, oben geöffnete Gehäuse einsetzbaren Austausch-Stoßdämpfer, der die für die Dämpfungswirkung erforderlichen Teile enthält, nämlich einen Stoßdämpferkolben mit einer durch einen Zylinderdeckel hindurch herausgeführten Kolbenstange, einen Zylinderraum, Ventile und ein Reservoir für die Dämpfflüssigkeit, dadurch g e k e n n z e i c h n e t , daß diese mit einer Buchse (6) ausgerüstet ist, die in ihrem inneren Querschnitt der Außenkontur des Gehäuses (1) angepaßt ist und die einen auf das Gehäuse (1) aufschiebbaren unteren Teil sowie einen mit einem Innengewinde (19) versehenen oberen Teil aufweist, in den die Austausch-Stoßdämpfereinheit (2) einschraubbar ist.

. . .

8. Vorrichtung nach Anspruch 7, dadurch
   g e k e n n z e i c h n e t , daß diese einen nach dem
   Einsetzen in das Gehäuse (1) herausragenden oberen Abschnitt aufweist, der einen Gewindering (18) trägt, welcher in das Innengewinde (19) der Buchse (6) einschraubbar ist.

...

0105940

**Fig. 1**

**Fig. 2**

Fig. 3

20

12

10

11

14

9

16

13

17

1

B

Fig. 4

13

13

13

13

Europäisches
Patentamt

**EUROPÄISCHER RECHERCHENBERICHT**

010594C

Nummer der Anmeldung

EP 82 10 9277

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | US-A-4 261 446 (J.E. BOLGER) <br><br> * Ganzes Dokument * | 1-4,6-8 | B 60 G 13/00 <br> F 16 F 9/54 |
| Y | EP-A-0 024 101 (ARVIN INDUSTRIES, INC.) <br> * Ansprüche 6-11, Figuren 30-32, 36-38 * | 3,4 | |
| Y | US-A-1 753 005 (F.R. GRADY) <br> * Seite 1, Zeile 68 - Seite 2, Zeile 24; Figuren 1-4 * | 3,4 | |
| X | US-A-4 280 602 (K.D. KLOSTER) <br> * Spalte 2, Zeile 50 - Spalte 3, Zeile 24; Figur 3 * | 7,8 | |
| A | EP-A-0 029 289 (GENERAL MOTORS CORP.) <br> * Ansprüche 1, 5 * | 1,7 | **RECHERCHIERTE SACHGEBIETE (Int. Cl. 3)** <br><br> B 60 G 13/00 <br> B 60 F 15/00 <br> F 16 F 9/54 |
| A,D | DE-A-2 937 212 (DEUTSCHE ITT INDUSTRIES GMBH) <br> * Anspruch 1; Figur 1 * | 1 | F 16 L 13/14 <br> F 16 L 33/20 |

Der vorliegende Recherchenbericht wurde für alle Patentansprüche erstellt.

| Recherchenort <br> BERLIN | Abschlußdatum der Recherche <br> 22-04-1983 | Prüfer <br> PETTI P |
|---|---|---|